# EUROPEAN PATENT SPECIFICATION

(11) **EP 2 122 861 B1**
(45) Date of publication and mention of the grant of the patent: **16.11.2011**
(21) Application number: 08723400.1
(22) Date of filing: 11.03.2008
(51) Int. Cl.: H04W 72/00, H04W 56/00

(54) **SYNCHRONIZATION IN A PACKET BASED MOBILE COMMUNICATION SYSTEM**
SYNCHRONISIERUNG IN EINEM PAKETGESTEUERTEN MOBILEN KOMMUNIKATIONSSYSTEM
SYNCHRONISATION DANS UN SYSTÈME DE COMMUNICATION MOBILE PAR PAQUETS

(30) Priority: 12.03.2007 KR 20070023966
(43) Date of publication of application: 25.11.2009
(60) Divisional application: 11153288.3
(73) Proprietor: Electronics and Telecommunications Research Institute, Yuseong-gu Daejon 305-350 (KR); Samsung Electronics Co., Ltd., Suwon-si, Gyeonggi-do 442-742 (KR)
(72) Inventor: LEE, Kyoung-Seok, Daejon 305-509 (KR); JUNG, Soo-Jung, Daejon 305-509 (KR); KIM, Jae-Heung, Daejon 305-728 (KR); KIM, Jung-Im, Daejon 302-280 (KR); RYU, Byung-Han, Daejon 305-755 (KR)
(74) Representative: Betten & Resch
(86) International application number: PCT/KR2008/001363
(87) International publication number: WO 2008/111785

(56) References cited:
- WO-A1-2006/137708
- WO-A2-98/44755
- US-A1- 2005 054 365
- US-A1- 2006 146 756
- NTT DOCOMO ET AL: "Uplink synchronization" 3GPP DRAFT; R2-070781, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. St. Louis, USA; 20070209, 9 February 2007 (2007-02-09), XP050133807 [retrieved on 2007-02-09]
- TEXAS INSTRUMENTS INC: "On Uplink Synchronization maintenance in LTE" 3GPP DRAFT; R2-070700_ON_UL_SYNC_MAINTENANCE_IN LTE_TI, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. St. Louis, USA; 20070209, 9 February 2007 (2007-02-09), XP050133735 [retrieved on 2007-02-09]
- NTT DOCOMO ET AL: "Initial Access Procedure in LTE" 3GPP DRAFT; R2-062995_RACH_PROCEDURE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Seoul, Korea; 20061005, 5 October 2006 (2006-10-05), XP050132504 [retrieved on 2006-10-05]
- TEXAS INSTRUMENTS: "UL Synchronization Management in LTE_ACTIVE" 3GPP DRAFT; R1-070739_ULSYNC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. St. Louis, USA; 20070205, 5 February 2007 (2007-02-05), XP050104769 [retrieved on 2007-02-05]
- ERICSSON: "Initial, Random Access and Identity Handling" 3GPP DRAFT; R2-060592, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Denver, USA; 20060209, 9 February 2006 (2006-02-09), XP050130549 [retrieved on 2006-02-09]

## Description

### TECHNICAL FIELD

The present invention relates to radio resource allocation for data transmission in a packet-based mobile communication system; and, more particularly, to a method for acquiring uplink sync in a user equipment without uplink sync, according to independent claim 1. radio resource allocation method that can reduce wasteful use of radio resources while minimizing the use of control channel blocks to efficiently support a voice service in a packet-based mobile communication system on which standardization is in progress, and a data transmission method employing the radio resource allocation method, are examples to understand the invention.

This work was supported by the IT R&D program of MIC/IITA [2005-S-404-13, "Research & Development of Radio Transmission Technology for 3G evolution"].

### BACKGROUND ART

The 3rd Generation Partnership Project (3GPP) is actively working on Long Term Evolution (LTE) standardization to develop a next-generation mobile communication system specification. A next-generation mobile communication system adopts a radio transmission scheme based on Frequency Division Duplex (FDDD). The next-generation mobile communication system uses Orthogonal Frequency Division Multiple Access (OFDMA) in downlink and Single Carrier Frequency Division Multiple Access (SC-FDMA) in uplink.

A typical mobile communication system includes base stations each constituting a cell and a plurality of mobile stations, which are also referred to as user equipments, used by users. A plurality of user equipments transmit and receive packet data to and from a base station through radio channel.

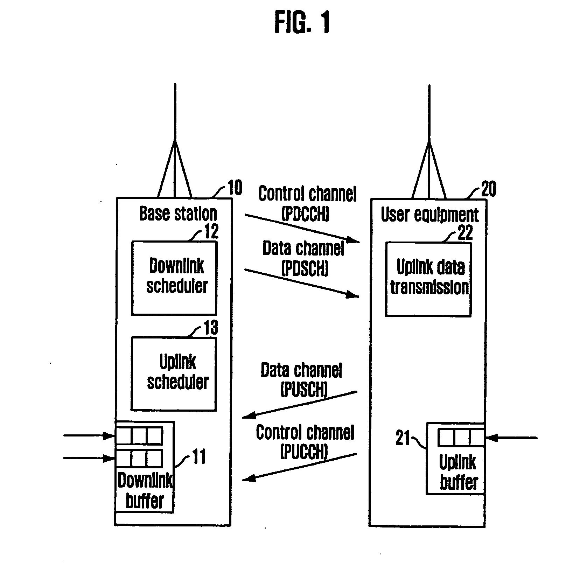

Fig. 1 shows a typical packet-based mobile communication system. The drawing only shows a base station 10 and a user equipment 20.

The base station 10 and the user equipment 20 transmit and receive data and control information through a radio channel which is divided into downlink and uplink. Downlink data are inputted to a downlink buffer 11. A downlink scheduler 12 allocates radio resources to each user equipment, and the data inputted to the downlink buffer 11 are transmitted to the user equipment by using the radio resources allocated by the downlink scheduler 12. In a packet-based mobile communication system, the downlink scheduler 12 allocates radio resources dynamically. Thus, control information needed to demodulate a data channel, which is a physical downlink shared channel (PDSCH), is transmitted through a physical downlink control channel (PDCCH).

Meanwhile, uplink data are transmitted as follows. At first, an uplink scheduler 13 in the base station 10 allocates radio resources for transmitting uplink data. The user equipment 20 forms an uplink data channel, which is a physical uplink shared channel (PUSCH), based on uplink radio resource information transmitted from the base station 10 through the control channel, which is a physical downlink control channel PDCCH, and transmits data inputted to an uplink buffer 21. The uplink control channel, which is the PUCCH, is used to transmit uplink buffer state information and downlink retransmission information.

Hereinafter, physical channels used in a packet-based mobile communication system will be described briefly. Downlink channel related to data transmission is as follows.

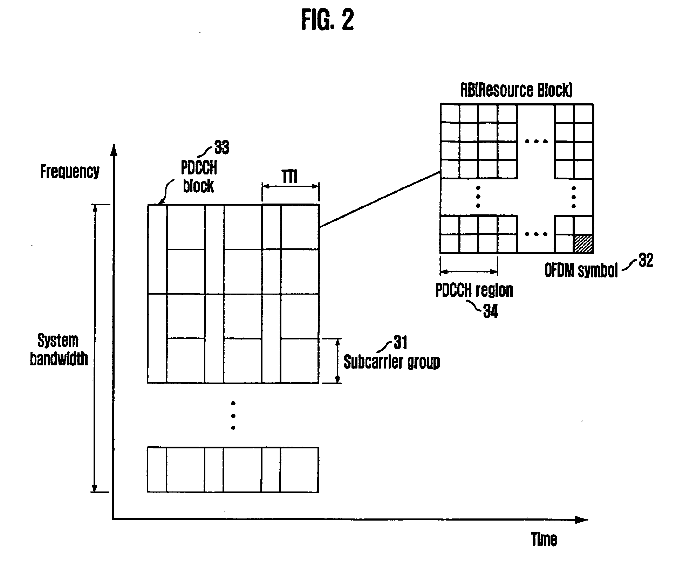

The PDSCH is a physical channel for transmitting downlink data. The PDSCH is allocated to radio resource blocks (RB) shown in Fig. 2. Generally, the scheduler of the base station 10 may allocate a plurality of resource blocks to one user equipment 20. Also, when a small PDCCH region 34 is used in the radio resource blocks shown in Fig. 2, OFDM symbols 32 may be allocated to the other regions except the PDCCH region 34. In short, when the use of PDCCH blocks is minimized, the quantity of data transmitted through one radio resource block can be increased that much.

The PDCCH is a physical channel for transmitting control information needed to receive data to the user equipment. The PDCCH is allocated to a PDCCH block 33 in Fig. 2. The PDCCH includes control information needed for receiving PDSCH data and control information on the PUSCH. Control information on the PUSCH is transmitted through the PDCCH, because a central scheme where the uplink packet scheduler managing uplink transmission and reception of the packet-based mobile communication system is disposed in the base station is used. To be specific, the uplink packet scheduler positioned in the base station manages uplink radio resources of all user equipments under the control of the base station, allocates resources, and collects them.

Uplink channels related to data transmission is as follows. The PUSCH is a physical channel for transmitting uplink data and it performs similar function as the PDSCH. Control information related to the PUSCH is transmitted from the base station through the PDCCH.

The PUCCH is a physical channel for transmitting control information from a user equipment to a base station, and it uses different radio resources from the PUSCH. Control information included in the PUCCH includes downlink channel state, downlink retransmission information, and uplink buffer state information.

Fig. 2 illustrates a structure of a downlink radio channel in a typical packet-based mobile communication system. The drawing shows a radio channel structure of an LTE system which is under discussion in the 3GPP.

In the packet-based mobile communication system, data are transmitted in parallel using a plurality of radio carriers for communication. Herein, the present invention will be described assuming an OFDMA packet-based mobile communication system.

In the packet-based mobile communication system, data are transmitted using a plurality of subcarriers, and subcarriers within a system bandwidth, e.g., 20MHz, are grouped and managed on the basis of a subcarrier group 31 in the axis of frequency. In the axis of time, OFDM symbols 32 are grouped and managed on the basis of transmit time interval (TTI), e.g., 1 msec. For example, one TTI may include 14 OFDM symbols according to the time length of OFDM symbols. Accordingly, radio resources are divided into resource blocks (RB) and one resource block is a resource allocation unit binding OFDM symbols into subcarrier groups 31 and TTI units in the respect of frequency and time axes.

Resource blocks are what the scheduler of a base station divides radio resources into predetermined sizes so that data can be easily allocated. For instance, a resource block is a size binding symbols of '12 subcarriers x TTI (1 msec).' The amount of data to be allocated to a resource block is different according to how adaptively modulation is executed and the kind of modulation, such as QPSK, 16QAM, and 64QAM. Also, when data are allocated to resource blocks, channel coding and modulation scheme needed for wireless communication are used. This also varies the data amount allocated to a resource block. Typical packet-based mobile communication systems use SC-FDMA in the uplink. Since the features of the present invention are the same as the method described with reference to Fig. 2, uplink radio channel structure will not be described herein.

From the perspective of operating radio channel, a base station (which is a transmitting part) should transmit control information in such a manner that a user equipment (which is a receiving part) can demodulate data. For this, a PDCCH is used. PDCCH uses subcarriers of the entire system bandwidth in the frequency axis and uses up to 3 OFDM symbols within a TTI in the time axis. Therefore, the PDCCH can use up to 3 symbols as a PDCCH region in a resource block. The PDCCH. region distributed over the entire system bandwidth is divided intro a plurality of PDCCH resource blocks 33 to transmit necessary control information to each user equipment. Referring back to Fig. 2, one PDCCH. resource block is formed of 3 OFDM symbols included in two resource blooks and one control information is formed of '2 resource blocks x 14 subcarriers x 3 OFDM symbols - 84 symbols'

Since the scheduler variably allocates data channel resources in the packet-based mobile communication system, much control information is needed to transmit and receive data through data channels. As the control information uses control channel radio resources whose quantity is limited, it is required to develop a method that can minimize the use of the control channel radio resources. Also, in a system employing a persistent allocation method where control channel radio resources are not used, persistent radio resources should be able to be allocated to other user equipments to thereby minimize wasteful consumption of data channel radio resources. Particularly, it is required to minimize the used amount of control channel for a voice service, because the voice service uses low data rates. NTT DOCOMO ET AL: "Uplink synchronization" 3GPP DRAPER, R2-070781, 3RD GENERATION PARTNERSHIP PROJECT (3GPP), refers to a mechanism that ensures that uplink synchronization is obtained before resuming downlink/uplink transmission after long uplink transmission inactivity. For the downlink transmission to resume, the uplink re-synchronization procedure requires three steps: the basis station transmits an "uplink synch request", the user equipment transmits the random access preamble indicated in the "uplink synch request" over an asynchronous random access channel, and the basis station transmits a MAC control PDU which signals a timing advance command.

### Disclosure

### TECHNICAL PROBLEM

The present invention is directed to providing a method for according uplink synchronization in a user equipment without uplink synchronization according to claim 1. An example to understand the invention devised to overcome the problems of conventional technology is directed to providing a radio resource allocation method that can reduce wasteful use of radio resources while minimizing the use of control channel blocks to efficiently support a voice service in a packet-based mobile communication system, a data transmission method employing the radio resource allocation method.

Other objects and advantages of the present invention can be understood by the following description, and become apparent with reference to the embodiments of the present invention. Also, it is obvious to those skilled in the art of the present invention that the objects and advantages of the present invention can be realized by the means as claimed and combinations thereof.

### TECHNICAL SOLUTION

In accordance with an example to understand the invention, there is provided a method for transmitting data in a packet-based mobile communication system, which includes: (a) allocating a user equipment identifier to user equipment; (b) allocating a persistent radio resource block by transmitting downlink and/or uplink radio resource block allocation information and downlink and/or uplink radio resource block position information to a specific user equipment according to a control message transmitted from an upper layer; and (c) coding the persistent radio resource block to transmit data to the specific user equipment through the persistent radio resource block.

The example to understand the invention may further include: (d) when there are no data to be transmitted to the specific user equipment at a certain transmission period, transmitting a control channel block including information that there are no data to be transmitted to the specific user equipment through a control channel in order to allocate the persistent radio resource block allocated to the specific user equipment to another user equipment.

The example to understand the invention may further include: (e) when the persistent radio resource block need a change, transmitting a control channel block including newly allocated downlink and/or uplink radio resource block information to the specific mobile station

In another example to understand the invention, there is provided a method for allocating uplink or downlink radio resource blocks in a packet-based mobile communication system, which includes: (a) allocating a user equipment identifier to user equipment; (b) allocating a persistent radio resource block by transmitting downlink and/or uplink radio resource block allocation information and downlink and/or uplink radio resource block position information to a specific user equipment according to a control message transmitted from an upper layer to provide a real-time service; and (c) when there are no data to be transmitted to the specific user equipment at a certain transmission period, transmitting a control channel block including information that there are no data to be transmitted to the specific user equipment through a control channel in order to allocate the persistent radio resource block allocated to the specific user equipment to another user equipment

In accordance with another example to understand the invention, there is provided a method for allocating uplink or downlink radio resource blocks in a packet-based mobile communication system, which includes: (a) allocating a user equipment identifier to user equipment; (b) allocating a persistent radio resource by transmitting downlink and/or uplink radio resource block allocation information and downlink and/or uplink radio resource block position information to a specific user equipment according to a control message transmitted from an upper layer to provide a real-time service; and (c) when the persistent radio resource block need a change, transmitting a control channel block including newly allocated downlink and/or uplink radio resource block information to the specific mobile station.

In accordance with the, present invention, there is provided a method according to claim 1 for acquiring uplink synchronization in a user equipment without uplink synchronization, which includes: (a) transmitting a control channel block including information requesting for the uplink synchronization to the user equipment through a control channel; (b) when the user equipment requests random access through a random access channel, transmitting synchronization establishment information to the user equipment through a control channel and a response channel. Wherein the control channel block further inclucles downlink data channel non-allocation information informing that there are no data to be transmitted through downlink.

### ADVANTAGEOUS EFFECTS

It can be minimized the use of control channels by allocating uplink and downlink data channel radio resources in a persistent allocation method at a moment when a base station sets up a connection to a packet service and transmitting data, through the persistent radio resources. Also it can be minimized the wasteful consumption of the radio resources by changing the persistent radio resources through dynamic scheduling and control channels. Furthermore, the technology of the present invention can form a control channel needed when. a user equipment loses uplink synchronization.

### BRIEF DESCRIPTION OF THE DRAWINGS

Fig. 1 shows a typical packet-based mobile communication system.
Fig. 2 illustrates a structure of a downlink radio channel in a typical packet-based mobile communication system.
Fig. 3 illustrates a control channel in accordance with an embodiment of the present invention.
Fig. 4 shows a control channel structure for persistent allocation in accordance with an embodiment of the present invention.
Fig. 5 describes a sync acquisition process in accordance with an embodiment of the present invention.

### BEST MODE FOR THE INVENTION

The advantages, features and aspects of the invention will become apparent from the following description of the embodiments with reference to the accompanying drawings, which is set forth hereinafter. When it is considered that detailed description on a related art may obscure a point of the present invention, the description will not be provided herein. Hereinafter, specific embodiments of the present invention will be described in detail with reference to the accompanying drawings.

According to an example to understand the invention, scheduling and resource allocation methods are decided at a moment when a connection between a base station and a user equipment is set up and a service method is decided. When the service has a periodic characteristic such as a voice service, radio resources are allocated using persistent allocation method and dynamic scheduling is used complementarily. For instance, a base station decides transmission/reception information of radio resources to be used for data transmission at the moment when a voice service is set up based on Quality of Service and data rate transmitted from an upper layer. Accordingly, the base station allocates data to be transmitted to persistent resource blocks, e.g., transmission period of 20 msec, and resource block number RB 4.

When a voice service begins, the base station does not use PDCCH but uses PDSCH, which is a data channel, to transmit data to the user equipment. The user equipment demodulates a corresponding resource block based on resource position information and period decided by the base station, and receives the data.

The technology of an example to understand the invention uses a dynamic scheduling method as an auxiliary signaling scheme of the persistent allocation method to maximally take advantage of the characteristics of a packet system. Accordingly, a scheduler of the base station manages the states of user equipments in consideration of buffer state, channel state, and quality of service (QoS) information of the user equipments. When the persistent radio resources allocated to the user equipment need to be changed, the base station changes the radio resources through the PDCCH.

From the perspective of the user equipment, each user equipment demodulates the control channel, which is PDCCH, at a period of Transmit Time Interval (TTI), analyzes information of a control channel block corresponding to the user equipment, and executes a corresponding operation. To be specific, when the demodulated control channel information is information on the PDSCH, the user equipment changes the persistent data channel with data channel information included in the control channel information. Also, when the demodulated control channel information is information on PUSCH, the user equipment executes operation to change radio resources for the data channel based on the demodulated control channel information.

Furthermore, when data whose amount is temporarily more than the amount of data transmitted through the persistent radio resources, the base station executes radio resource allocation control procedure by using dynamic scheduling through the PDCCH.

The radio resource allocation process, and the date transmission process suggested as examples to understand the present invention will be described hereinafter.

The base station may broadcast system information which includes a scheduling policy and general attributes on persistent allocation and dynamic allocation of radio resources according to a service supported by the base station through a broadcasting channel.

In the process where the base station and a user equipment execute radio resource control (RRC) connection to initiate a real-time service, the base station gives an identifier (ID) to the user equipment. Herein, the base station may give a group identifier to the user equipment according to the provided service. Also, the base station decides in advance scheduling attributes for the user equipment through the RRC connection process without transmitting control channel blocks at corresponding TTI so that the user equipment can decode the allocated radio resource blocks and receive packet data. To take an example, the base station sets up the attributes of radio resource blocks, such as radio resource block allocation period and duration, position of radio resource block, modulation and coding schemes by using QoS information .and data rate information transmitted form an upper layer, and allocates a persistent radio resource block to a specific user equipment.

Subsequently, the base station transmits packet data based on the scheduling information transmitted to the user equipment through the RRC connection setup process by using the allocated radio resource block. user equipments search persistent radio resource blocks for the real-time service without searching for control channel blocks at corresponding TTI based on the scheduling information set up in advance and acquired through the RRC connection setup process, and decode packet data. Each of the mobile terminals decodes the coded packet data through a method using a Cyclic Redundancy Check (CRC) masked with an identifier assigned thereto or a scrambling code unique to the terminal itself.

After the service is terminated, the base station and the user equipment cancel the radio resource allocation information allocated for the packet service through an RRC disconnection process.

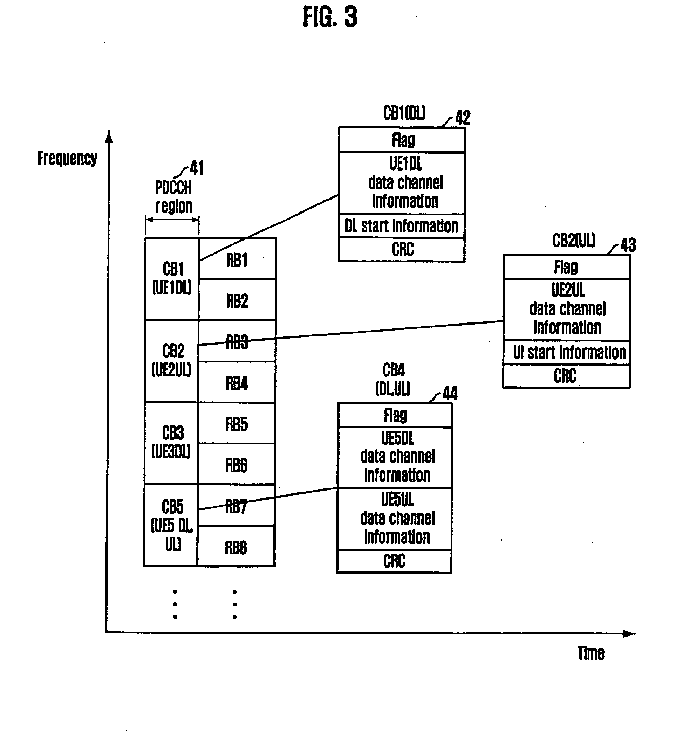

Fig. 3 illustrates a structure of control channel for transmitting packet data in accordance with an example to understand the invention.

Fig. 3 briefly shows a structure of a PDCCH, which is typically used in a packet-based mobile communication system, and a control channel structure added thereto. In other words, the control channel structure of Fig. 3 includes a structure for minimizing Control information in dynamic scheduling scheme where persistent allocation scheme is not used.

A PDCCH region 41 is formed of a plurality of control channel blocks (CB) CB1 to CBn, and each control channel block includes control information of uplink or downlink data channels for one user equipment. For example, Fig. 3 shows a control channel block CB1 42 including downlink data channel information of a user equipment 1, which is a user equipment (UE1), and a control channel block CB2 43 including uplink data channel information of a user equipment 2, which is a user equipment (UE2).

The structure information of a typical control channel block defined in the LTE includes the following information.

First, it includes modulation/demodulation information of an uplink or downlink data channel, which includes position and size information of a radio resource block (e.g., RB5, RB6, TTI length 1), data channel coding information (e.g., turbo coding method), adaptive modulation information (e.g., QPSK, 16QAM, 64QAM), and antenna information (e.g., Multiple-Input Multiple-Output (MIMO) information), and re-transmission information.

A 16-bit CRC is an error correction code of a control channel block and it is masked with a user equipment identifier, which is a Cell-Radio Network Temporary Identifier (C-RNTI). Accordingly, only a designated user equipment can demodulate control information.

Referring to Fig. 3, when a base station forms channel information on uplink or downlink in a control channel block, it adds start information of a data channel block to the control channel block. For example, the control channel block CB1 42 shown in Fig. 3 includes a flag, downlink data channel information of the user equipment UE1, downlink start information, and CRC information. Also, the control channel block. CB2 43 includes a flag, uplink data channel information of the user equipment UE2, uplink start information, and CRC information.

Generally, temporal start position of a data channel radio resource block marked in a control channel is fixed and it does not vary. Thus, the control channel does not include information indicating start time. In an example to understand the present invention, however, start information is added to the control channel to alleviate the temporal restriction. To be specific, one to four-bit information is added to the control channel block to mark the radio resource block allocation position of a date channel.

Also, according to an example to understand the present invention, the base station adds uplink data channel information to one control channel block along with the downlink data channel information and transmits the control channel block with the uplink data channel information and the downlink data channel information to the user equipment. For instance, a control channel block CB4 44 shown in Fig. 3 includes a flag, CRC information, downlink data channel information of a user equipment UE5, and the uplink data channel information simultaneously. The user equipment can set up the uplink data channel and receive data through the downlink data channel based on the control information of the control channel block.

Generally, uplink and downlink are allocated to a separate control channel block and transmitted to a user equipment. Therefore, two control channel blocks should be used to allocate an uplink data channel and a downlink data channel to one user equipment at one TTI period. In consequences, a method of simultaneously allocating uplink control information and downlink control information to one control channel block is used to minimize the use of control channel block resources.

In an example to understand the present invention, control information is formed in one control channel block by separately forming uplink information and downlink information, and uses flag information to identify the format of the control channel block. Control channel blocks may be of the same size to be easily demodulated by the user equipment. Existing control channel information should be reduced to form uplink control information and downlink control information in one control channel block. In case of a service with a uniform data rate, such as a voice service, it is easy to form modulation/demodulation information because the data size is limited.

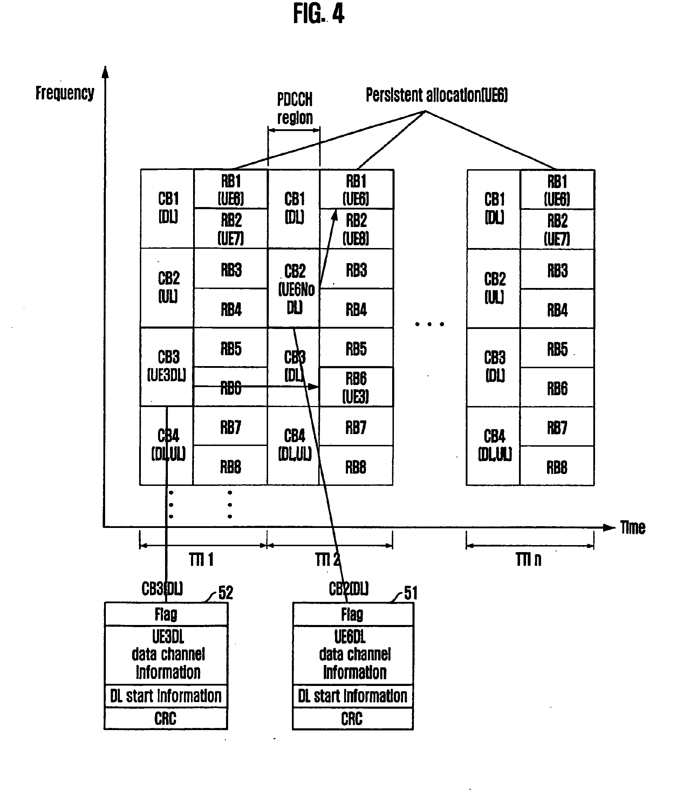

Fig. 4 shows a control channel structure for persistent allocation in accordance with an embodiment of the present invention.

While radio resources operate in the persistent allocation method, the radio resource block RB1 is continuously allocated to a user equipment UE6, and the user equipment UE6 can demodulate the resource block of a PDSCH without PDCCH information.

In this state, when there are no data to be transmitted to the user equipment UE6 at a position TTI 2 in the time axis, the radio resource block RB1 region allocated to the user equipment UE6 is wastefully consumed. This is because the radio resource block RB1 is a persistent region and it cannot be reallocated to another user equipment.

To resolve this problem, the base station adds data channel non-allocation information to a control channel block 51 to inform the user equipment that there are no uplink or downlink data to be transmitted. The base station checks downlink buffers of all user equipments for which radio resources are allocated in the persistent allocation method at each TTI, and when there are no data to be transmitted, marks the control channel with data channel non-allocation, and transmits it. In other words, the control channel block includes a flag, downlink data channel disallcoation information, start information, and CRC information, just as the control channel block CB2 51 does in Fig. 4.

Accordingly, the base station can allocate the persistent radio resource block of a specific user equipment to another user equipment. When the user equipment UE6 acknowledges the data channel non-allocation through the control channel, it does not demodulate its persistent data channel . Likewise, the user equipment may transmit information that it does not have data to be transmitted through an uplink data channel to the base station through a control channel.

Meanwhile, since control channel includes data channel start information along with data channel information, as the control channel block CB3 52 of Fig. 4, the base station can inform data channel radio resource block information even before a corresponding TTI comes.

Also, resource allocation information including persistent radio resource blocks allocated to a user equipment can be formed and transmitted to the user equipment in order to persistently allocate more radio resources to the user equipment. To be specific, when there are many data to be transmitted to the user equipment at a TTI with a persistent resource block, additional radio resource blocks are allocated to the user equipment and change information therefor may be transmitted as a resource through the control channel.

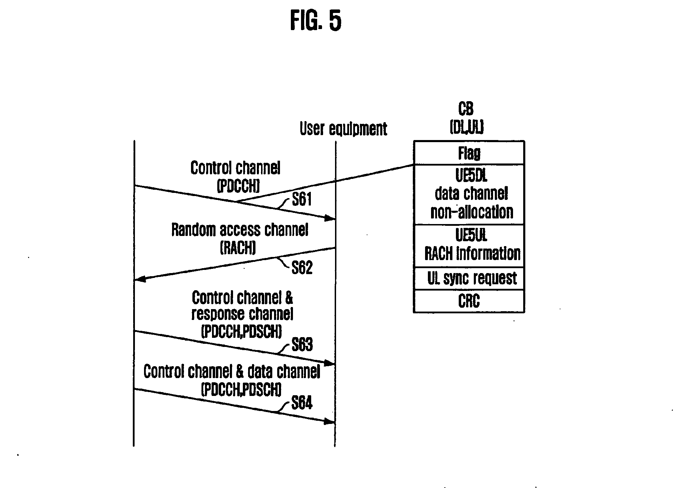

Fig. 5 describes a sync acquisition process in accordance with an embodiment of the present invention.

The uplink between a base station and a user equipment should be synchronized in a packet-based mobile communication system. This is to transmit data by using radio resources at a designated position in time and frequency axes, when a plurality of user equipments transmit data to the base station. In particular, a mobile communication system employing SC-FDMA requires precise time sync to demodulate data symbols.

The user equipment under the control of the base station can make transmission/reception through uplink data channel PUSCH and uplink control channel PUCCH in the mobile communication system. While the user equipment does not maintain uplink sync, the user equipment can receive data and information through downlink but it cannot transmit data and information through uplink. When the user equipment receives data through downlink and it does not maintain uplink sync, the user equipment should stop transmitting data through the uplink and execute random access to acquire sync.

According to the present invention, when the user equipment does not have uplink sync and the base station transmits data through the downlink data channel, the base station forms a separate control channel block and transmits it. For this, the present invention suggests a method of adding control information commanding the user equipment to acquire uplink sync to a control channel block in the base station and transmitting it from the base station to the user equipment, which is described in Fig. 5. The control channel block may also include downlink data channel non-allocation information and Random Access Channel (RACH) information for uniquely allocating RACH.

Referring to Fig. 5, when the user equipment does not have uplink sync, it goes through the following process to acquire the uplink sync.

In step S61, when the user equipment does not have uplink sync, the base station adds information requesting uplink sync and CRC information to the control channel block and transmits them to the user equipment through the PDCCH. Herein, the control channel block may further include a flag, downlink data channel non-allocation information which informs that there are no data to be transmitted through the downlink, and RACH information.

In step S62, when the user equipment receives the control channel block through the control channel, it executes random access procedure through the RACH to acquire the uplink sync. The random access procedure used in the present invention is a general random access procedure discussed in the LTE. Thus, it will not be described in detail in this specification.

In step S63, the base station transmits various informations to the user equipment through the control channel and a response channel to acquire the uplink sync. In step S64, the base station executes general data transmission through the control channel and the downlink data channel.

The method of the present invention described above may be programmed for a computer. Codes and code segments constituting the computer program may be easily inferred by a computer programmer of ordinary skill in the art to which the present invention pertains. The computer program may be stored in a computer-readable recording medium, i.e., data storage, and it may be read and executed by a computer to realize the method of the present invention. The recording medium includes all types of computer-readable recording media,

while the present invention has been described with respect to the specific embodiments, it will be apparent to those skilled in the art that various changes and modifications may be made without departing from the scope of the invention as defined in the following claims.

INDUSTRIAL APPLICABILITY The technology of the present invention is applied to application of radio resources for transmitting data in a packet-based mobile communication system, and it minimizes wasteful consumption of the radio resources by minimizing the use of control channel blocks to thereby efficiently support a voice service.

## Claims

1. A method for acquiring uplink synchronization in a user equipment without uplink synchronization, comprising:
(a) transmitting a control channel block (S61) including information requesting for the uplink synchronization to the user equipment through a control channel; and
(b) when the user equipment requests random access (S62) through a random access channel, transmitting synchronization information (S63) to the user equipment through a control channel and a response channel,
**characterized in that**
the control channel block (S61) further includes downlink data channel noun-allocation information informing that there are no data to be transmitted through downlink (S61).

2. The method of claim 1, wherein the control channe block (S61) includes the random access channel information, the uplink synchronization request information, and Cyclic Redundancy Check, CRC, information.

3. The method of claim 1 or 2, wherein the control channel block (S61) includes a flag, and data channel non-allocation information informing that there is no radio resource information allocated for data or data to be transmitted, and CRC information.

4. The method of claim 2, or 3, wherein the CRC information is masked with the user equipment identifier so that only corresponding user equipment performs demodulation.

5. The method of one of claims 1 to 4, wherein the control channel (S61) is a physical downlink control channel PDCCH.

6. The method of one of claims 1 to 6, wherein the downlink data channel (S64) is a physical downlink data channel PDSCH.

## Patentansprüche

1. Verfahren zum Erfassen einer Aufwärtsstreckensynchronisation in einem Anwendergerät ohne Aufwärtsstreckensynchronisation, das umfasst:
(a) Senden eines Steuerkanalblocks (S61), der Informationen enthält, die die Aufwärtsstreckensynchronisation anfordern, über einen Steuerkanal zu dem Anwendergerät; und
(b) wenn das Anwendergerät einen Direktzugriff (S62) über einen Direktzugriffskanal anfordert, Senden von Synchronisationsherstellungsinformationen (S63) zu dem Anwendergerät über einen Steuerkanal und einen Antwortkanal,
**dadurch gekennzeichnet, dass**
der Steuerkanalblock (S61) ferner Abwärtsstreckendatenkanal-Nichtzuweisungsinformationen enthält, die darüber informieren, dass über die Abwärtsstrecke keine Daten zu senden sind (S61).

2. Verfahren nach Anspruch 1, wobei der Steuerkanalblock (S61) die Direktzugriffskanal-Informationen, die Aufwärtsstreckensynchronisations-Anforderungsinformationen und CRC-Informationen, d. h. Informationen zur zyklischen Redundanzprüfung, enthält.

3. Verfahren nach Anspruch 1 oder 2, wobei der Steuerkanalblock (S61) ein Flag, Datenkanal-Nichtzuweisungsinformationen, die darüber informieren, dass keine Funkressourceninformationen, die Daten zugewiesen sind, oder keine Daten zu senden sind, und CRC-Informationen enthält.

4. Verfahren nach Anspruch 2 oder 3, wobei die CRC-Informationen mit der Anwendergerätkennung maskiert sind, so dass nur ein entsprechendes Anwendergerät eine Demodulation ausführt.

5. Verfahren nach einem der Ansprüche 1 bis 4, wobei der Steuerkanal (S61) ein physikalischer Abwärtsstreckensteuerkanal, PDCCA, ist.

6. Verfahren nach einem der Ansprüche 1 bis 5, wobei der Abwärtsstreckendatenkanal (S64) ein physikalischer Abwärtsstreckendatenkanal, PDSCH, ist.

## Revendications

1. Procédé d'acquisition de synchronisation de liaison montante dans un équipement d'utilisateur sans synchronisation de liaison montante, comprenant les étapes suivantes :
(a) transmettre un bloc de voie de commande (S61) comprenant des informations demandant la synchronisation de liaison montante à l'équipement d'utilisateur par le biais d'une voie de commande ; et
(b) lorsque l'équipement d'utilisateur demande un accès aléatoire (S62) par le biais d'une voie d'accès aléatoire, transmettre des informations d'établissement de synchronisation (S63) à l'équipement d'utilisateur par le biais d'une voie de commande et d'une voie de réponse,
**caractérisé en ce que**
le bloc de voie de commande (S61) comprend en outre des informations de non-affectation de voie de données de liaison descendante informant qu'il n'y a pas de données à transmettre par le biais de la liaison descendante (S51).

2. Procédé selon la revendication 1, dans lequel le bloc de voie de commande (S61) comprend les informations de voie d'accès aléatoire, les informations de demande de synchronisation de liaison montante, et les informations de contrôle de redondance cyclique, CRC.

3. Procédé selon la revendication 1 ou 2, dans lequel le bloc de voie de commande (S61) comprend un drapeau et des informations de non-affectation de voie de données informant qu'il n'y a pas d'information de ressource radio affectée des données ou de données à transmettre, et des informations de CRC.

4. Procédé selon la revendication 2 ou 3, dans lequel les informations de CRC sont masquées par l'identifiant d'équipement d'utilisateur de sorte qu'uniquement l'équipement d'utilisateur correspondant effectue une démodulation.

5. Procédé selon l'une quelconque des revendications 1 4, dans lequel la voie de commande (S61) est une voie de commande de liaison descendante physique, PDCCH.

6. Procédé selon l'une quelconque des revendications 1 à 5, dans lequel la voie de données de liaison descendante (S64) est une voie de données de liaison descendante physique, PDSCH.
